Europäisches Patentamt

European Patent Office

Office européen des brevets

(19)

(11) EP 0 692 706 A2

(12) EUROPÄISCHE PATENTANMELDUNG

(43) Veröffentlichungstag:
17.01.1996 Patentblatt 1996/03

(51) Int. Cl.$^6$: **G01M 3/04**, G01M 3/22

(21) Anmeldenummer: 95110353.0

(22) Anmeldetag: 03.07.1995

(84) Benannte Vertragsstaaten:
AT BE CH DE DK ES FR GB IT LI LU NL SE

(30) Priorität: 14.07.1994 DE 4424909

(71) Anmelder: SIEMENS AKTIENGESELLSCHAFT
D-80333 München (DE)

(72) Erfinder: Jax, Peter, Dr.
D-91056 Erlangen (DE)

(54) **Verfahren und Vorrichtung zur Ortung von Schadstoffansammlungen**

(57) Die Erfindung betrifft ein Verfahren und eine Vorrichtung zur Ortung einer Schadstoffansammlung mit einer für einen Schadstoff durchlässigen Sammelleitung (1; 7), wobei ein Transportmedium durch die Sammelleitung (1; 7) geführt wird. An einem Ausgang der Sammelleitung (1; 7) wird detektiert, ob im Transportmedium ein Schadstoff enthalten ist. Es ist vorgesehen, daß die Sammelleitung (1; 7) aus zwei Strängen (1a und 1b; 7a und 7b) besteht, die parallel zueinander und eng nebeneinander verlegt sind. Diese Stränge (1a, 1b; 7a, 7b) werden in entgegengesetzter Richtung kontinuierlich vom Transportmedium durchspült. Aus der zeitlichen Differenz zwischen zwei aufeinander folgenden Schadstoffdetektionen am Ausgang der Sammelleitung (1; 7) wird der Ort der Schadstoffansammlung an der Sammelleitung (1; 7) bestimmt. Die Stränge (1a, 1b; 7a, 7b) können als Vor- und Rückleitung einer Sammelleitung (1; 7) oder als eigenständige Sammelleitungen ausgebildet sein.

FIG 1

EP 0 692 706 A2

## Beschreibung

Die Erfindung betrifft ein Verfahren zur Ortung einer Schadstoffansammlung mit einer für einen Schadstoff durchlässigen Sammelleitung, wobei ein Transportmedium durch die Sammelleitung geführt wird und am Ausgang der Sammelleitung detektiert wird, ob im Transportmedium ein Schadstoff enthalten ist. Die Erfindung betrifft auch eine Vorrichtung zur Ortung einer Schadstoffansammlung mit einer für einen Schadstoff durchlässigen Sammelleitung, die mit einer Pumpe zum Transport eines Transportmediums durch die Sammelleitung hindurch und mit einem Sensor zum Erkennen des Schadstoffes verbunden ist, wobei der Sensor mit einer Auswerteeinheit verbunden ist.

Ein derartiges Verfahren und eine Vorrichtung zur Durchführung eines solchen Verfahrens sind aus der DE 41 25 739 A1 bekannt. Dabei kommt es darauf an, daß mit einfachen Mitteln Proben von einer Anzahl verschiedener Meßstellen auf Schadstoffe untersucht werden, ohne daß eine Vielzahl von Sensoren erforderlich wäre. Beim Bekannten wird dazu das aus der DE-PS 24 31 907 bekannte Leckerkennungs- und Ortungssystem (LEOS) eingesetzt. Dieses System zeichnet sich aus durch eine Sammelleitung, durch die in Intervallen ein Transportmedium hindurchgeleitet wird. Die Sammelleitung ist so ausgebildet, daß ein in ihrer Nähe vorhandener Schadstoff in sie eindringen kann. Das geschieht während einer Diffusionszeitspanne zwischen zwei Intervallen, in denen das Transportmedium durch die Sammelleitung geleitet wird. Im Transport-Intervall, das auf eine Diffusionszeitspanne folgt, wird der eingedrungene Schadstoff mit dem Transportmedium einem Sensor zugeführt, der am Ende der Sammelleitung angeordnet ist. Dort wird der Schadstoff erkannt. Aus der Zeitspanne vom Beginn des Transport-Intervalls, in dem das Transportmedium strömt, bis zum Eintreffen des Schadstoffes am Sensor wird der Ort an der Sammelleitung bestimmt, wo der Schadstoff in die Leitung eingedrungen ist. Dabei wird auf die bekannte Strömungsgeschwindigkeit des Transportmediums zurückgegriffen.

Die in der DE 41 25 739 A1 gezeigte Sammelleitung weist einzelne Proben-Zutrittsöffnungen auf, die Meßstellen entsprechen. Nur an diesen Proben-Zutrittsöffnungen können Schadstoffe in die Sammelleitung gelangen. Beispielsweise kann die Wand der Sammelleitung im Bereich der Proben-Zutrittsöffnung für den Schadstoff durchlässig und sonst undurchlässig sein. Der durchlässige Abschnitt kann durch eine Diffusionsmembrane gebildet sein, die aus Sintermetall oder Kunststoff bestehen kann. Es können als Proben-Zutrittsöffnung aber auch steuerbare Ventile in der Sammelleitung angeordnet sein.

Das Spulen der Sammelleitung mit dem Transportmedium in Intervallen erfordert, daß die dafür vorgesehene Pumpe in Intervallen zugeschaltet und wieder abgeschaltet wird. Um eine Ortung eines Schadstoffeintrittes in die Sammelleitung vornehmen zu können, ist es erforderlich, daß der Einschaltzeitpunkt der Pumpe möglichst genau erfaßt wird. Die Pumpe muß dazu mit der Auswerteeinheit, die auch mit dem Sensor verbunden ist, in Verbindung stehen.

Dadurch, daß abwechselnd eine Diffusionszeitspanne auf ein Transport-Intervall folgt, erfolgt die Ortung einer Schadstoffansammlung relativ langsam.

Der Erfindung lag die Aufgabe zugrunde, ein Verfahren und eine Vorrichtung zur Ortung einer Schadstoffansammlung anzugeben, die ohne eine aufwendige Steuerung einer Pumpe auskommen und eine schnelle Ortung ermöglichen.

Die zuerst genannte Aufgabe, ein Verfahren zur Ortung einer Schadstoffansammlung anzugeben, wird gemäß der Erfindung dadurch gelöst, daß durch zwei Stränge der Sammelleitung, die eng nebeneinander und parallel zueinander als Vor- und Rückleitung verlegt sind, das Transportmedium in einander entgegengesetzten Richtungen kontinuierlich geführt wird und daß aus der zeitlichen Differenz zwischen zwei Schadstoffdetektionen am Ausgang der Sammelleitung der Ort der Schadstoffansammlung an der Sammelleitung bestimmt wird.

Dadurch, daß zwei Stränge der gleichen Sammelleitung eng nebeneinander verlegt sind, gelangt ein Schadstsoff, der nur an einem Ort auftritt, an zwei - bezogen auf die Sammelleitung - voneinander beabstandeten Stellen in die Sammelleitung hinein. Folglich werden am Ausgang der Sammelleitung in einem zeitlichen Abstand zwei Schadstoffmaxima registriert. Die Zeitspanne zwischen diesen beiden Maxima entspricht der Zeitspanne, die erforderlich ist, damit das Transportmedium über die Sammelleitung von einem der eng benachbarten Orte, an denen der Schadstoff eingedrungen ist, zum anderen gelangt. Unter der Bedingung, daß die beiden Orte nebeneinander liegen, kann bei bekannter Anordnung der Sammelleitung in Verbindung mit der bekannten Strömungsgeschwindigkeit des Transportmediums in der Leitung aus der Zeitspanne zwischen den Maxima der Ort des Schadstoffeintritts genau berechnet werden.

Beispielsweise sind die beiden Stränge der Sammelleitung hintereinander geschaltet und parallel zueinander als Vor- und Rückleitung verlegt. Die in der Zeitspanne $\Delta t$ zwischen den beiden Maxima vom Transportmedium zurückgelegte Strecke, die mit Hilfe der bekannten Geschwindigkeit $v$ des Transportmediums zu bestimmen ist, entspricht dann der doppelten Entfernung vom Ort des Schadstoffeintritts in die Sammelleitung bis zu dem Punkt, an dem die beiden Stränge (Vor- und Rückleitung), z.B. durch ein U-förmiges Bogenstück, miteinander verbunden sind. Der gesuchte Ort der Schadstoffansammlung befindet sich also an der Sammelleitung in einer Entfernung

$$Z = \frac{1}{2} v \, \Delta t$$

von dem Punkt, an dem Vorleitung und Rückleitung miteinander verbunden sind, wobei die Entfernung der Hälfte derjenigen Strecke entspricht, die das Transportmedium in der Zeitspanne Δt zurücklegt.

Mit dem Verfahren nach der Erfindung wird der Vorteil erzielt, daß eine genaue Ortung von Schadstoffansammlungen möglich ist, ohne daß das Transportmedium in Intervallen bewegt werden muß. Man kommt vorteilhafterweise mit einer kontinuierlich arbeitenden Pumpe aus. Drüber hinaus wird der Vorteil erzielt, daß wegen des kontinuierlichen Betriebs der Pumpe die Ortung schneller als bei bekannten Verfahren möglich ist.

Beispielsweise ist jeder der beiden Stränge als eigenständige Transportleitung ausgebildet. Dabei ist jeder Strang mit einer eigenen Pumpe für das Transportmedium und mit einem eigenen Sensor zum Erkennen der Schadstoffmaxima ausgestattet. Zur Ortung einer Schadstoffansammlung wird dann die Zeitspanne Δt zwischen aufeinander folgenden Schadstoffmaxima am ersten und am zweiten Sensor bestimmt. Im übrigen erfolgt die Auswertung nach der Gleichung

$$x = \frac{a - v \cdot \Delta t}{2} \quad .$$

Dabei ist x der Abstand der Schadstoffansammlung von demjenigen Sensor, der zuerst ein Schadstoffmaximum anzeigt, a ist die Länge eines Stranges, v ist die Geschwindigkeit des Transportmediums und Δt ist die bestimmte Zeitspanne.

Zum Kalibrieren des Ortungsverfahrens kann an einem bekannten Ort ein Testgas in die Nähe der benachbarten Stränge der Sammelleitung gebracht werden oder es kann ein Testgas gleichzeitig in benachbarte Stellen der beiden Stränge der Sammelleitung eingebracht werden.

Die zweite gestellte Aufgabe, eine Vorrichtung zur Ortung einer Schadstoffansammlung anzugeben, wird gemäß der Erfindung dadurch gelöst, daß zwei Stränge der Sammelleitung parallel zueinander und eng nebeneinander angeordnet und als Vor- und Rückleitung geschaltet sind und daß die Pumpe eine kontinuierlich arbeitende Pumpe ist.

Mit einer derartigen Vorrichtung ist es vorteilhafterweise möglich, eine Schadstoffansammlung zu orten, ohne daß die Pumpe in Intervallen arbeiten müßte. Eine solche Intervallsteuerung für eine Pumpe wäre aufwendig. Man kommt vorteilhafterweise mit einer ungesteuerten, kontinuierlich arbeitenden Pumpe aus. Durch den Einsatz einer solchen Pumpe kann die Vorrichtung sehr schnell eine Schadstoffansammlung orten. Dadurch, daß der Schadstoff stets gleichzeitig in beide eng nebeneinander angeordnete Stränge der Sammelleitung eindringt, kann aus der zeitlichen Differenz, mit der zwei Schadstoffmaxima bei kontinuierlichem Spülen der Sammelleitung an einem Sensor ankommen, der Ort, an dem der Schadstoff in die Sammelleitung eingedrungen ist, genau bestimmt werden.

Die beiden Stränge können, z.B. mittels eines U-förmigen Kupplungsstückes, hintereinander geschaltet sein. Man kommt dann mit nur einer Pumpe und nur einem Sensor aus.

Jeder der beiden Stränge kann aber auch als eigenständige Transportleitung ausgebildet sein. In diesem Fall benötigt jede Transportleitung eine Pumpe und einen Sensor.

Die beiden Sensoren müssen dann mit einer gemeinsamen Auswerteeinheit verbunden sein.

Beispielsweise sind in den Strängen der Sammelleitung für Schadstoffe durchlässige Stellen angeordnet, während die übrigen Teile der Stränge undurchlässig sind. Dabei kommt es darauf an, daß in den beiden Strängen die jeweiligen durchlässigen Stellen einander räumlich nah zugeordnet sind. Ein Paar aus zwei durchlässigen Stellen, die in den Strängen einander zugeordnet sind, arbeitet vorteilhafterweise wie ein Einzelsensor. Eine Vielzahl von solchen Paaren aus durchlässigen Stellen an den Strängen der Sammelleitung ersetzt vorteilhafterweise eine große Anzahl einzelner, teurer Sensoren.

Die durchlässigen Stellen können durch Ventile gebildet sein oder durch in die Sammelleitung eingefügte Diffusionsmembranen aus Sintermetall oder Kunststoff.

Durch die räumliche Beschränkung auf einzelne Meßorte, wird das Meßverfahren vereinfacht.

Zum Kalibrieren der Vorrichtung zur Ortung einer Schadstoffansammlung kann ein Testgas gezielt in die Nähe der Sammelleitung gebracht werden. Dabei müssen jedoch die beiden Stränge in gleicher Weise mit Testgas beaufschlagt werden.

Das Testgas kann auch in die Leitung eingebracht werden. Dazu sind Öffnungen in den beiden Strängen notwendig, die sich räumlich sehr nahe sind. Damit das Testgas gleichzeitig in beide Stränge eingebracht werden kann, sind beispielsweise räumlich benachbarte Öffnungen in den Strängen über ein T-förmiges Leitungsstück mit einer Kalibrierleitung verbunden, durch die das Testgas herangeführt wird.

Mit dem Verfahren und der Vorrichtung nach der Erfindung wird insbesondere der Vorteil erzielt, daß der Ort einer Schadstoffansammlung mit einfachen Mitteln und schnell erkannt werden kann.

Das Verfahren und die Vorrichtung nach der Erfindung werden anhand der Zeichnung näher erläutert:

FIG 1     zeigt eine erste Ausführungsform der Vorrichtung zur Ortung von Schadstoffansammlungen.

FIG 2     zeigt eine zweite Ausführungsform dieser Vorrichtung.

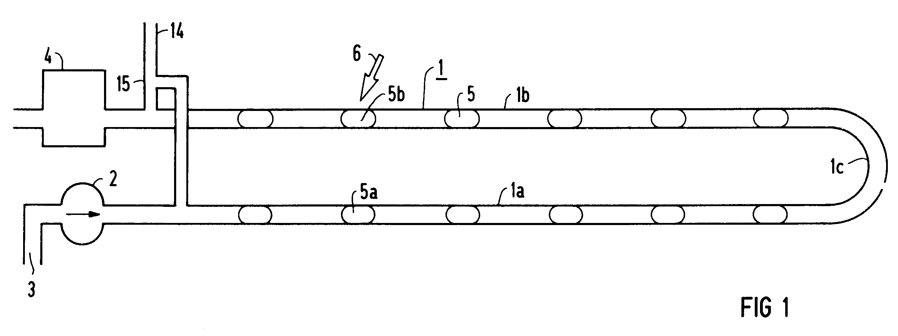

Figur 1 zeigt eine Sammelleitung 1, durch die hindurch mit einer Pumpe 2 ein Transportmedium geführt wird. Dieses Transportmedium kann Luft sein, die an einer Ansaugstelle 3 angesaugt wird. Das Transportmedium kann aber auch ein anderes Gas sein. Die Pumpe 2 ist in Strömungsrichtung am Anfang der Sammelleitung 1 angeordnet. Sie kann aber auch am Ende der Sammelleitung 1 angeordnet sein. Die Sammelleitung 1 besteht in Strömungsrichtung aus einem ersten und einem zweiten Strang 1a und 1b. Der zweite Strang 1b ist mit dem ersten Strang 1a über ein U-förmiges Kupplungsstück 1c verbunden und ist dadurch parallel zum ersten Strang 1a angeordnet. Die beiden Stränge 1a und 1b liegen eng nebeneinander und werden in entgegengesetzter Richtung von dem Transportmedium durchströmt. Am Ende des zweiten Stranges 1b ist ein Sensor 4 angeordnet, mit dem der zu ortende Schadstoff erkannt werden kann. Die in Figur 1 gezeigte Sammelleitung 1 weist für den Schadstoff durchlässige Stellen 5 auf und besteht sonst aus einem für den Schadstoff undurchlässigen Material. Dabei kommt es darauf an, daß eine durchlässige Stelle 5b im zweiten Strang 1b stets unmittelbar einer entsprechenden durchlässigen Stelle 5a im parallelen ersten Strang 1a räumlich nah zugeordnet ist. Der Abstand zwischen den durchlässigen Stellen eines solchen Paares 5a und 5b ist dabei möglichst gering.

Falls ein Schadstoff über einen mit einem Pfeil 6 markierten Weg in die Nähe der Sammelleitung 1 gelangt, dringt er gleichzeitig durch die durchlässigen Stellen 5a und 5b in beide Stränge 1a und 1b ein. Dort wird der Schadstoff sofort von dem kontinuierlich strömenden Transportmedium erfaßt und zum Sensor 4 transportiert. Dabei bleibt der räumliche Abstand zwischen den beiden Konzentrationsmaxima des Schadstoffes in der Sammelleitung 1 gleich bis der Sensor 4 erreicht ist. Dieser räumliche Abstand entspricht dem in Strömungsrichtung des Transportmediums entlang der Sammelleitung 1 gemessenen räumlichen Abstand zwischen den beiden durchlässigen Stellen 5a und 5b.

Am Sensor 4 treffen die beiden Konzentrationsmaxima in einem zeitlichen Abstand ein. Der räumliche Abstand läßt sich daraus in einfacher Weise in einer z.B. in den Sensor 4 integrierten Auswerteeinheit mittels der Strömungsgeschwindigkeit des Transportmediums bestimmen, die bei kontinuierlichem Pumpvorgang konstant und bekannt ist.

Aufgrund der in Figur 1 gezeigten Geometrie der Sammelleitung 1 entspricht der räumliche Abstand der beiden Konzentrationsmaxima der doppelten Entfernung zwischen dem Kupplungsstück 1c und dem Paar aus den durchlässigen Stellen 5a und 5b, durch die der Schadstoff in die beiden Stränge 1a und 1b der Sammelleitung 1 eingedrungen ist.

Man erhält also den genauen Ort, an dem der Schadstoff aufgetreten ist, indem man vom Kupplungsstück 1c aus entlang der Sammelleitung 1 die Hälfte der räumlichen Entfernung zwischen zwei Konzentrationsmaxima abmißt.

Auf diese Weise ist eine Schadstoffansammlung auf einfache Weise zu orten.

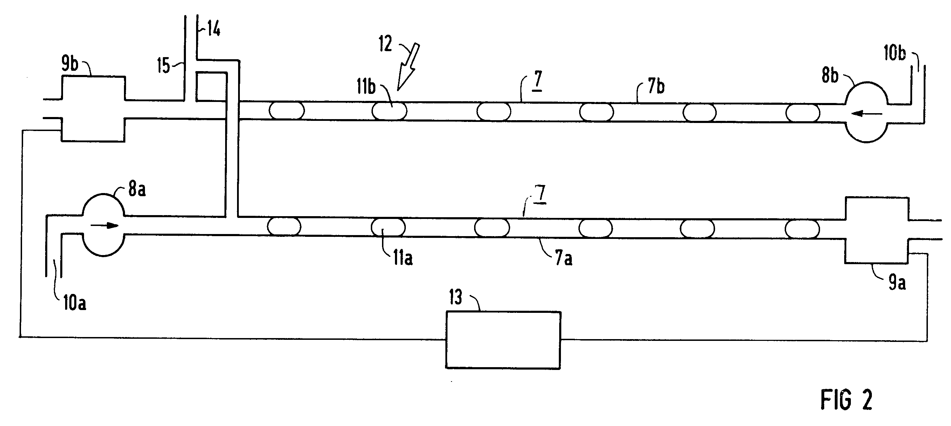

Figur 2 zeigt eine Vorrichtung zur Ortung von Schadstoffansammlungen, die der Vorrichtung nach Figur 1 in Aufbau und Funktionsweise weitgehend entspricht. Die Sammelleitung 7 besteht jedoch aus zwei Strängen 7a und 7b, von denen beide mit einer Pumpe 8a, 8b und einem Sensor 9a, 9b verbunden sind. Außerdem weist jeder Strang 7a und 7b eine eigene Ansaugstelle 10a, 10b auf. Die Pumpen 8a, 8b können am Anfang oder am Ende der Stränge 7a, 7b angeschlossen sein. Die Stränge 7a und 7b sind, wie die Stränge 1a und 1b der Figur 1 nah nebeneinander und parallel zueinander angeordnet. Durchlässige Stellen 11a und 11b in den beiden Strängen 7a, 7b liegen unmittelbar nebeneinander, so daß ein Schadstoff, der, wie durch einen Pfeil 12 dargestellt, in die Nähe der Stränge 7a, 7b gelangt, fast gleichzeitig in die beiden Stränge 7a, 7b eindringen kann.

Nach Figur 2 sind die beiden Sensoren 9a, 9b mit einer Auswerteeinheit 13 verbunden. Falls Konzentrationsmaxima eines Schadstoffes zuerst am einen der Sensoren 9a, 9b und nach einem zeitlichen Abstand am anderen Sensor 9b, 9a registriert werden, wird aus diesem zeitlichen Abstand mit Hilfe der bekannten Strömungsgeschwindigkeit des Transportmediums und den bekannten Längen der beiden Stränge 7a, 7b der räumliche Abstand zwischen dem Ort des Schadstoffeintrittes und einem der Sensoren 9a, 9b bestimmt.

Zur Kalibrierung der gezeigten Vorrichtungen nach den Figuren 1 und 2 kann gleichzeitig in beide Stränge 1a, 1b; 7a, 7b ein Testgas eingeleitet werden. Dazu ist eine Zuleitung 14 für Testgas vorhanden, die über ein T-Stuck 15 an eng benachbarten Stellen in die Stränge 1a, 1b; 7a, 7b einmündet. Die Einmündung in die Stränge 1a, 7a und 1b, 7b sind wie die durchlässigen Stellen 5a, 11a und 5b, 11b einander gegenüber liegend angeordnet. Abweichungen in der Zeichnung bedingen sich durch die Darstellungsmöglichkeiten. Zur Kalibrierung wird mit den gezeigten Vorrichtungen der bereits bekannte Ort, an dem das Testgas in die Stränge 1a, 1b; 7a, 7b eingespeist wird, bestimmt. Das Testgas kann auch gezielt in die Nähe eines zuvor bestimmten Paares aus eng benachbarten durchlässigen Stellen 5a, 5b; 11a, 11b gebracht werden.

Mit dem Verfahren und der Vorrichtung nach der Erfindung kann eine Schadstoffansammlung auf einfache Weise und schnell geortet werden. Es ist keine in Intervallen arbeitende Pumpe erforderlich.

Das Verfahren und die Vorrichtung nach der Erfindung können beispielsweise zur Überwachung von Pipelines oder zur Luftüberwachung in Industrieanlagen eingesetzt werden. Dabei können Lecks in einer Pipeline oder auch in einer anderen Leitung oder in einem Behälter geortet werden. Beim Einsatz zur Luftüberwachung können in allgemeiner Weise Orte mit erhöhter Schadstoffkonzentration erkannt werden.

## Patentansprüche

1. Verfahren zur Ortung einer Schadstoffansammlung mit einer für einen Schadstoff durchlässigen Sammelleitung (1; 7), wobei ein Transportmedium durch die Sammelleitung (1; 7) geführt wird und am Ausgang der Sammelleitung (1; 7) detektiert wird, ob im Transportmedium ein Schadstoff enthalten ist, **dadurch gekennzeichnet,** daß durch zwei Stränge (1a, 1b; 7a, 7b) der Sammelleitung (1; 7), die eng nebeneinander und parallel zueinander als Vor- und Rückleitung verlegt sind, das Transportmedium in einander entgegengesetzten Richtungen kontinuierlich geführt wird und daß aus der zeitlichen Differenz zwischen zwei aufeinander folgenden Schadstoffdetektionen am Ausgang der Sammelleitung (1; 7) der Ort der Schadstoffansammlung an der Sammelleitung (1; 7) bestimmt wird.

2. Verfahren nach Anspruch 1, **dadurch gekennzeichnet,** daß jeder der beiden Stränge (7a, 7b) als eigenständige Transportleitung ausgebildet ist.

3. Verfahren nach einem der Ansprüche 1 oder 2, **dadurch gekennzeichnet,** daß zum Kalibrieren der Ortung an einem bekannten Ort ein Testgas gleichzeitig an oder in die beiden Sammelleitungsstränge (1a, 1b; 7a, 7b) gebracht wird.

4. Vorrichtung zur Ortung einer Schadstoffansammlung mit einer für einen Schadstoff durchlässigen Sammelleitung (1; 7), die mit einer Pumpe (2; 8a, 8b) zum Transport eines Transportmediums durch die Sammelleitung (1; 7) hindurch und mit einem Sensor (4; 9a, 9b) zum Erkennen des Schadstoffs verbunden ist, wobei der Sensor (9a, 9b) mit einer Auswerteeinheit (13) verbunden ist, **dadurch gekennzeichnet,** daß zwei Stränge (1a, 1b; 7a, 7b) der Sammelleitung (1; 7) parallel zueinander und eng nebeneinander angeordnet und als Vor- und Rückleitung geschaltet sind und daß die Pumpe (2; 8a, 8b) eine kontinuierlich arbeitende Pumpe ist.

5. Vorrichtung nach Anspruch 4, **dadurch gekennzeichnet,** daß die beiden Stränge (1a, 1b) hintereinander geschaltet sind.

6. Vorrichtung nach Anspruch 4, **dadurch gekennzeichnet,** daß jeder der beiden Stränge (7a, 7b) als eigenständige Transportleitung mit einer Pumpe (8a, 8b) und einem Sensor (9a, 9b) verbunden ist und daß die Sensoren (9a, 9b) mit einer Auswerteeinheit (13) verbunden sind.

7. Vorrichtung nach einem der Ansprüche 4 bis 6, **dadurch gekennzeichnet,** daß in den Strängen (1a, 1b; 7a, 7b) durchlässige Stellen (5a, 5b; 11a, 11b) für den Schadstoff angeordnet sind, daß die übrigen Teile der Stränge (1a, 1b; 7a, 7b) undurchlässig sind und daß eine durchlässige Stelle (5b; 11b) in einem Strang (1b; 7b) einer durchlässigen Stelle (5a; 11a) im anderen Strang (1a; 7a) räumlich nah zugeordnet ist.

8. Vorrichtung nach einem der Ansprüche 4 bis 7, **dadurch gekennzeichnet,** daß die beiden Stränge (1a, 1b; 7a, 7b) an räumlich benachbarten Stellen über ein T-Stück (15) mit einer Zuleitung (Kalibrierleitung) (14) verbunden sind.

FIG 1

FIG 2